Europäisches Patentamt

European Patent Office

Office européen des brevets

(19)

(11) EP 0 967 774 A2

(12) EUROPÄISCHE PATENTANMELDUNG

(43) Veröffentlichungstag:
29.12.1999 Patentblatt 1999/52

(51) Int. Cl.$^6$: H04M 1/58, H04M 1/72

(21) Anmeldenummer: 99102269.0

(22) Anmeldetag: 05.02.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 25.06.1998 DE 19828337

(71) Anmelder: ROBERT BOSCH GMBH
70442 Stuttgart (DE)

(72) Erfinder: Wiedorn, Klaus
61209 Echzell (DE)

(54) **Telekommunikationsgerät mit einer zweidraht-vierdraht Schnittstelle**

(57) Es wird ein Telekommunikationsgerät (1) vorgeschlagen, das einer vereinfachten Rückhör-Kompensation dient. Das Telekommunikationsgerät (1) umfaßt eine Zweidraht-/Vierdraht- Schnittstelle (5) zur Umsetzung einer analogen Zweidraht-Telefonleitung (10) auf getrennte Signalwege für einen Sendezweig (15) und einen Empfangszweig (20), wobei die Schnittstelle (5) zur analogen Zweidraht-Telefonleitung (10) hin einen ersten Anschluß (A) und einen zweiten Anschluß (B), zum Sendezweig (15) hin einen dritten Anschluß (HOP) und einen vierten Anschluß (HON) und zum Empfangszweig (20) hin einen fünften Anschluß (MIP) und einen sechsten Anschluß (MIN) aufweist. Der zweite Anschluß (B) ist mit dem vierten Anschluß (HON) verbunden. Der dritte Anschluß (HOP) ist über eine Apparateimpedanz ($Z_{app}$), die einer Impedanz ($Z_l$) der analogen Zweidraht-Telefonleitung (10) entspricht, mit dem ersten Anschluß (A) verbunden. Zwischen dem dritten Anschluß (HOP) und dem sechsten Anschluß (MIN) ist ein erster Spannungsteiler (25) vorgesehen, der ein am Sendezweig (15) anliegendes Sendesignal um einen Faktor $1/(2n)$ teilt. Zwischen dem ersten Anschluß (A) und dem fünften Anschluß (MIP) ist ein zweiter Spannungsteiler (30) vorgesehen, der ein an der analogen Zweidraht-Telefonleitung (10) anliegendes Signal um einen Faktor $1/n$ teilt.

Fig. 1

**Beschreibung**

Stand der Technik

Die Erfindung geht von einem Telekommunikationsgerät nach der Gattung des Hauptanspruchs aus.

Es sind bereits die Bosch-DECT (Digital Enhanced Cordless Telecommunication)-Telefon-Basisstationen Bosch DECT Alpha 1 und Bosch DECT Beta 2 bekannt, bei denen eine Zweidraht-/Vierdraht-Schnittstelle zur Umsetzung einer analogen Zweidraht-Telefonleitung auf getrennte Signalwege für einen Sende- und Empfangszweig verwendet wird. Die Zweidraht-/Vierdraht-Schnittstelle weist dabei zur analogen Zweidraht-Telefonleitung hin einen ersten Anschluß und einen zweiten Anschluß, zum Sendezweig hin einen dritten Anschluß und einen vierten Anschluß und zum Empfangszweig hin einen fünften Anschluß und einen sechsten Anschluß auf.

Vorteile der Erfindung

Das erfindungsgemäße Telekommunikationsgerät mit den Merkmalen des Hauptanspruchs hat demgegenüber den Vorteil, daß der zweite Anschluß mit dem vierten Anschluß verbunden ist, daß der dritte Anschluß über eine Apparateimpedanz, die einer Referenzimpedanz, dem sogenannten Leitungsnachbild der analogen Zweidraht-Telefonleitung entspricht, mit dem ersten Anschluß verbunden ist, daß zwischen dem dritten Anschluß und dem sechsten Anschluß ein erster Spannungsteiler vorgesehen ist, der ein am dritten Anschluß anliegendes Sendesignal um einen Faktor $1/(2n)$ teilt, und daß zwischen dem ersten Anschluß und dem fünften Anschluß ein zweiter Spannungsteiler vorgesehen ist, der das am ersten Anschluß anliegende Signal um einen Faktor $1/n$ teilt. Auf diese Weise ist eine Anpassung der Zweidraht-/Vierdraht-Schnittstelle für die Anschaltebedingungen in verschiedenen Ländern, die jeweils eine vorgegebene Referenzimpedanz als Leitungsabschluß der analogen Zweidraht-Telefonleitung fordern, mit kleinstmöglichem Entwicklungsaufwand realisierbar, da lediglich die Apparateimpedanz durch die im jeweiligen Land geforderte Referenzimpedanz für den Leitungsabschluß zu ersetzen ist. Die Rückhör-Kompensation von Sendesignalen am Empfangszweig muß daher für die verschiedenen Länder nicht jedesmal neu berechnet und entwickelt werden.

Durch die in den Unteransprüchen aufgeführten Maßnahmen sind vorteilhafte Weiterbildungen und Verbesserungen des im Hauptanspruch angegebenen Telekommunikationsgerätes möglich.

Besonders vorteilhaft ist es, daß der erste Anschluß über eine Darlingtonschaltung mit dem zweiten Anschluß verbunden ist und daß der dritte Anschluß über einen Tiefpaß mit dem zweiten Anschluß verbunden ist, wobei die Darlingtonschaltung über den Tiefpaß ansteuerbar ist. Auf diese Weise wird der über die Apparateimpedanz fließende Steuerstrom der Darlingtonschaltung minimiert, so daß eine Beeinflussung der Gleichstromcharakteristik, des Sende-/Empfangs- und Rückhörfrequenzgangs ausgeschlossen ist. Durch den Tiefpaß können Einflüsse bei der Aussteuerung von in einem Sprachübertragungsband empfangenen Sprachsignalen von der Darlingtonschaltung ferngehalten werden, so daß die Gleichstromcharakteristik durch Auswirkungen dieser Sprachaussteuerung auf den Steuerstrom der Darlington-Schaltung nicht wesentlich beeinflußt wird.

Ein weiterer Vorteil besteht darin, daß dem fünften Anschluß und dem sechsten Anschluß jeweils ein Hochpaß vorgeschaltet ist, wobei die beiden Hochpässe jeweils die gleiche Übertragungsfunktion aufweisen. Auf diese Weise wird eine an den Empfangszweig angeschaltete Folgestufe von einer zwischen dem ersten Anschluß und dem zweiten Anschluß anliegenden Gleichspannung entkoppelt. Aufgrund der gleichen Übertragungsfunktion wird verhindert, daß ein vom Sendezweig auf den Empfangszweig rückgekoppeltes Sendesignal am fünften und am sechsten Anschluß mit unterschiedlicher Phase und/oder Amplitude anliegt. Die Auslöschung des rückgekoppelten Sendesignals am Empfangszweig wird somit nicht beeinträchtigt.

Zeichnung

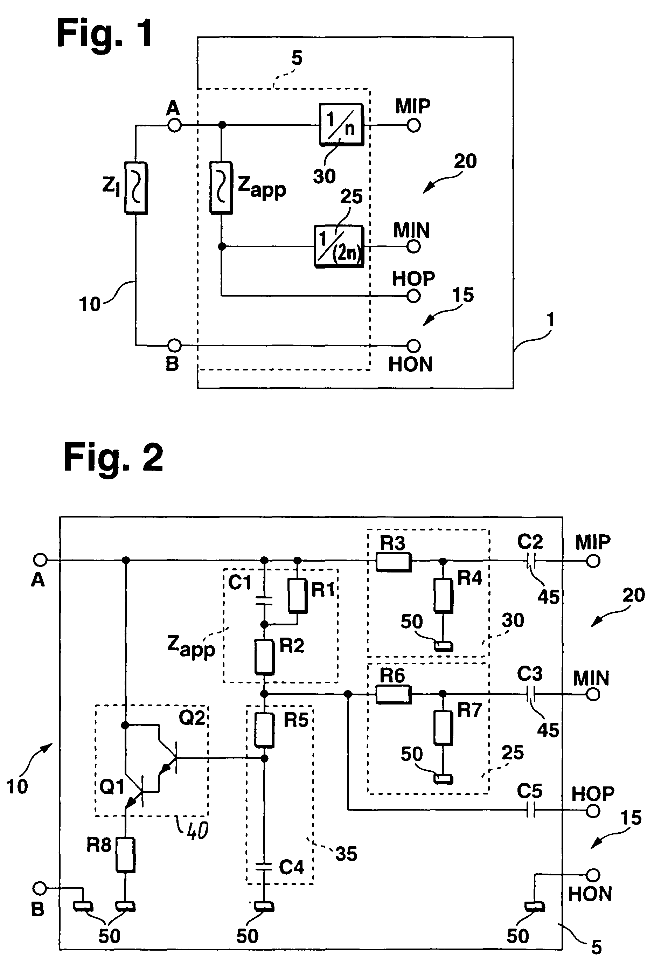

Ein Ausführungsbeispiel der Erfindung ist in der Zeichnung dargestellt und in der nachfolgenden Beschreibung näher erläutert. Es zeigen Figur 1 einen Schaltplan einer Zweidraht-/Vierdraht-Schnittstelle mit Rückhör-Kompensation in einer prinzipiellen Ausführungsform und Figur 2 einen detaillierten Schaltplan einer Zweidraht-/Vierdraht-Schnittstelle.

Beschreibung des Ausführungsbeispiels

In Figur 1 kennzeichnet 1 ein Telekommunikationsgerät, das Bestandteil einer Basisstation für ein schnurloses Telefonsystem sein kann und an eine analoge Zweidraht-Telefonleitung anschließbar ist. Das Telekommunikationsgerät 1 kann jedoch auch als schnurgebundenes Telekommunikationsendgerät, beispielsweise als Fernsprechapparat ausgebildet sein. Das Telekommunikationsgerät 1 umfaßt eine Zweidraht-/Vierdraht-Schnittstelle 5. Weitere Bauteile des Telekommunikationsgerätes 1 sind der Übersichtlichkeit halber nicht in Figur 1 dargestellt. Die Zweidraht-/Vierdraht-Schnittstelle 5 dient der Umsetzung einer analogen Zweidraht-Telefonleitung 10, die als Leitungsabschluß eine Leitungsimpedanz $Z_l$ aufweist, auf getrennte Signalwege für einen Sendezweig 15 und einen Empfangszweig 20, wobei die Schnittstelle 5 zur analogen Zweidraht-Telefonleitung 10 hin einen ersten Anschluß A und einen zweiten Anschluß B, zum Sendezweig 15 hin einen dritten Anschluß HOP und einen vierten Anschluß HON und zum Empfangszweig 20 einen fünften Anschluß MIP und einen sechsten Anschluß MIN aufweist. Der zweite Anschluß B ist dabei direkt mit dem vierten Anschluß HON verbunden. Weiterhin ist der dritte Anschluß HOP über einen Wechselstromwiderstand, die sogenannte Apparateimpedanz $Z_{app}$, die der Leitungsimpedanz $Z_l$ der analogen Zweidraht-Telefonleitung 10 entspricht, mit dem ersten Anschluß A verbunden. Zwischen dem dritten Anschluß HOP und dem sechsten Anschluß MIN ist ein erster Spannungsteiler 25 vorgesehen, der ein am dritten Anschluß HOP anliegendes Sendesignal um einen Faktor $1/(2n)$ teilt. Zwischen dem ersten Anschluß A und dem fünften Anschluß MIP ist ein zweiter Spannungsteiler 30 vorgesehen, der das am ersten Anschluß A anliegende Signal um einen Faktor $1/n$ teilt. Der erste Anschluß A ist über die Leitungsimpedanz $Z_l$ der analogen Zweidraht-Telefonleitung 10 mit dem zweiten Anschluß B verbunden.

Durch die beschriebene Schaltungsanordnung wird eine Rückhör-Kompensation realisiert. Ein am dritten Anschluß HOP und am vierten Anschluß HON des Sendezweiges 15 niederohmig eingespeistes Sendesignal gelangt über die Apparateimpedanz $Z_{app}$ zur analogen Zweidraht-Telefonleitung 10, die mit der Leitungsimpedanz $Z_l$ abgeschlossen ist. Die Leitungsimpedanz $Z_l$ entspricht dabei der Apparateimpedanz $Z_{app}$, so daß $Z_l = Z_{app}$ ist. Der erste Spannungsteiler 25 und der zweite Spannungsteiler 30 sind im Vergleich zur Apparateimpedanz $Z_{app}$ hochohmig, wodurch die Apparateimpedanz $Z_{app}$ nur unwesentlich beeinflußt wird. Auf diese Weise entspricht das an der Leitungsimpedanz $Z_l$ anliegende Sendesignal dem halben am dritten Anschluß HOP und am vierten Anschluß HON eingespeisten Sendesignal, da die Signale zum fünften Anschluß MIP und zum sechsten Anschluß MIN vergleichsweise hochohmig angeschaltet sind. Von dem ersten Anschluß A gelangt das halbierte, am Sendezweig 15 eingespeiste Sendesignal nicht nur zur Zweidraht-Telefonleitung 10, sondern auch zum fünften Anschluß MIP des Empfangszweiges 20. Dabei findet eine Dämpfung dieses Signals um den Faktor $1/n$ durch den zweiten Spannungsteiler 30 statt. Der Wert n ist dabei so einzustellen, daß das halbe Sendesignal und ein gleichphasig überlagertes und ebenfalls durch den zweiten Spannungsteiler 30 um den Faktor $1/n$ gedämpftes Empfangssignal von der Zweidraht-Telefonleitung 10 eine an den fünften Anschluß MIP und den sechsten Anschluß MIN angeschaltete Eingangsstufe nicht übersteuern.

Das am Sendezweig 15 eingespeiste Sendesignal liegt durch die Apparateimpedanz $Z_{app}$ um 1/2 und anschließend durch den zweiten Spannungsteiler 30 um den Faktor $1/n$ gedämpft am fünften Anschluß MIP an. Durch den ersten Spannungsteiler 25 wird das am Sendezweig eingespeiste Sendesignal um den Faktor $1/(2n)$ geteilt, so daß es um diesen Faktor gedämpft am sechsten Anschluß MIN anliegt. Somit liegt ein in Amplitude und Phase gleiches gedämpftes am Sendezweig 15 eingespeistes Sendesignal am fünften Anschluß MIP und am sechsten Anschluß MIN an. Am fünften Anschluß MIP und am sechsten Anschluß MIN des Empfangszweiges 20 kann ein Trennverstärker angeschaltet werden, der einen Operationsverstärker mit invertierendem und nicht invertierendem Eingang umfaßt. Durch die Phasenumkehr am invertierenden Operationsverstärkereingang kann eine Auslöschung des auf den Empfangszweig 20 rückgekoppelten, am Sendezweig 15 eingespeisten Sendesignals realisiert werden, so daß am Ausgang des Operationsverstärkers kein Sendesignal mehr anliegt.

In Figur 2 ist ein detaillierter Schaltplan der Zweidraht/Vierdraht-Schnittstelle 5 dargestellt. Dabei ist der erste Anschluß A mit dem Kollektor eines ersten npn-Bipolartransistors Q1 verbunden, dessen Emitter über einen achten Widerstand R8 mit einem Bezugspotential 50 verbunden ist. Der zweite Anschluß B ist direkt an das Bezugspotential 50 angeschlossen. Der erste Anschluß A ist außerdem mit dem Kollektor eines zweiten npn-Bipolartransistors Q2 verbunden, dessen Emitter mit der Basis des ersten npn-Bipolartransistors Q1 verbunden ist. Die Basis des zweiten npn-Bipolartransistors Q2 ist über einen vierten Kondensator C4 mit dem Bezugspotential 50 verbunden. Die Basis des zweiten npn-Bipolartransistors Q2 ist außerdem über eine Serienschaltung aus einem fünften Widerstand R5 und der Apparateimpedanz $Z_{app}$ mit dem ersten Anschluß A verbunden. Zwischen der Apparateimpedanz $Z_{app}$ und dem fünften Widerstand R5 ist über einen fünften Kondensator C5 der dritte Anschluß HOP angeschlossen. Zwischen die Apparateimpedanz $Z_{app}$ und den fünften Widerstand R5 ist über eine Serienschaltung aus dem ersten Spannungsteiler 25 und einem dritten Kondensator C3 der sechste Anschluß MIN angeschlossen. Der erste Anschluß A ist über eine Serienschaltung aus dem zweiten Spannungsteiler 30 und einem zweiten Kondensator C2 mit dem fünften Anschluß MIP verbunden. Die Apparateimpedanz $Z_{app}$ wird gebildet aus einer Parallelschaltung eines ersten Kondensators C1 und eines ersten Widerstandes R1, die in Serie mit einem zweiten Widerstand R2 geschaltet ist. Der erste Spannungsteiler 25 ist gebildet aus einem sechsten Widerstand R6 und einem siebten Widerstand R7, wobei der sechste Widerstand R6 einerseits an den fünften Widerstand R5 und den fünften Kondensator C5 und andererseits an den dritten Kondensator C3 und über den siebten Widerstand R7 an das Bezugspotential 50 angeschlossen ist. Der zweite Spannungsteiler 30 ist gebildet aus einem dritten Widerstand R3 und einem vierten Widerstand R4, wobei der dritte Widerstand R3 einerseits an die Apparateimpedanz $Z_{app}$ und den ersten Anschluß A und andererseits an den zweiten Kondensator C2 und über den vierten Widerstand R4 an das Bezugspotential 50 angeschlossen ist. Der fünfte Widerstand R5 und der vierte Kondensator C4 bilden einen Tiefpaß 35. Der zweite Kondensator C2 und der dritte Kondensator C3 bilden jeweils einen Hochpaß 45 mit gleicher Übertragungsfunktion.

Im folgenden wird die Funktionsweise der Zweidraht-/Vierdrahtschnittstelle 5 beschrieben. Die Schnittstelle 5 dient der Umsetzung der analogen Zweidraht-Telefonleitung 10 auf getrennte Signalwege für den Sendezweig 15 und den Emptangszweig 20. Gleichzeitig unterstützt diese Schnittstelle 5 weitere Anschaltebedingungen an analoge Hauptamtsanschlüsse, wie Gleichstromcharakteristik, die durch einen Gleichstromwiderstand gebildet wird, Apparateimpedanz, d. h. dem Wechselstromwiderstand, Sendeverstärkung, Empfangsverstärkung und Rückhör-Kompensation.

Die beschriebene Zweidraht-/Vierdraht-Schnittstelle 5 vereint die Möglichkeit, die Übertragungsparameter gezielt und unabhängig voneinander einzustellen. Das bedeutet, daß beispielsweise eine Anpassung der Gleichstromcharakteristik an eine jeweilige, landesspezifische Zulassungsvorschrift keine wesentliche Veränderung der Sende- und der Empfangsverstärkung, sowie der Rückhör-Kompensation bewirkt. Toleranzen einzelner Bauelemente wirken sich somit nicht wesentlich auf andere Übertragungsparameter aus. Eine Anpassung für eine bestimmte Länderversion benötigt daher nur kleinstmöglichen Entwicklungsaufwand und verursacht somit vergleichsweise geringe Kosten. Durch die Entkopplung der einzelnen Funktionalitäten wird sichergestellt, daß die einzelnen Übertragungsparameter über eine gesamte Fertigung hinweg eine sehr geringe Schwankungsbreite haben. Das verringert Ausfälle und erhöht die Fertigungsstabilität. Weiterhin benötigt die erfindungsgemäße Zweidraht-/Vierdraht-Schnittstelle 5 vergleichsweise wenig und kostenmäßig günstige Bauelemente und beansprucht weniger Leiterplattenfläche.

Das durch den ersten Anschluß A und den zweiten Anschluß B gebildete Eingangszweitor der Zweidraht-/Vierdraht-Schnittstelle 5 stellt die Schnittstelle zu dem analogen Telefonanschluß dar. Hier sind üblicherweise andere Funktionsblöcke vorgeschaltet, wie zum Beispiel Blitzschutz, Verpolungsschutz, Gabelumschalter, Nummernschaltimpuls-Transistor, Nummernschaltanalog-Transistor. Der dritte Anschluß HOP und der vierte Anschluß HON bilden ein Einspeisezweitor für die Senderichtung, an dem das Sendesignal niederohmig eingespeist wird. Der fünfte Anschluß MIP und der sechste Anschluß MIN bilden ein Auskoppelzweitor für die Empfangsrichtung, an das beispielsweise ein Analog-/Digital-Wandler über den oben beschriebenen Trennverstärker angeschaltet sein kann. Ein solcher Analog-/Digital-Wandler mit vorgeschaltetem Trennverstärker ist beispielsweise im Siemens-Bauteil DAC „PMB2920" realisiert. Der Operationsverstärkereingang des Trennverstärkers ist dabei hochohmig, so daß das Teilerverhältnis des ersten Spannungsteilers 25 und des zweiten Spannungsteilers 30 durch den an den fünften Anschluß MIP und an den sechsten Anschluß MIN angeschlossenen Trennverstärker nicht wesentlich beeinflußt wird. Der Analog-/Digital-Wandler dient der Weiterverarbeitung der Empfangssignale vom analogen Telefonanschluß.

In Abhängigkeit der jeweiligen landesspezifischen Zulassungsvorschrift hat ein analoges Telekommunikationsgerät neben einem definierten Wechselstromwiderstand auch einen ganz bestimmten Gleichstromwiderstand einzu-halten, in Deutschland beispielsweise $\leq 480\ \Omega$, in Griechenland, Spanien, Australien $\leq 400\ \Omega$, in Mexiko $\leq 370\ \Omega$, in Thailand $\leq 600\ \Omega$, usw.

Die Gleichstromcharakteristik wird durch den achten Widerstand R8 eingestellt, die den Emitterstrom des ersten npn-Bipolartransistors Q1 begrenzen. Der fünfte Widerstand R5 und der vierte Kondensator C4 bilden den Tiefpaß 35 mit einer Grenzfrequenz weit unterhalb des Sprachübertragungsbandes von 300 Hz bis 3400 Hz, der Störungen bei der Aussteuerung von Sprachsignalen vom zweiten npn-Bipolartransistor Q2 fernhält, um den Gleichstromwiderstand, bzw. die Gleichstromcharakteristik nicht wesentlich zu beeinflussen. Der erste und der zweite npn-Bipolartransistor Q1 und Q2 arbeiten in Darlingtonschaltung, um den über den ersten Widerstand R1 und den zweiten Widerstand R2 fließenden Basisstrom des zweiten npn-Bipolartransistors Q2 zu minimieren und eine Beeinflussung der Gleichstromcharakteristik, des Sende-, Empfangs- und Rückhörfrequenzgangs auszuschließen. Durch den beispielsweise als Gleichrichter ausgebildeten Verpolungsschutz wird gewährleistet, daß am ersten Anschluß A im Gesprächszustand immer positives und am zweiten Anschluß B immer das Bezugspotential 50, beispielsweise 0V oder Masse anliegt. Der Steuereingang des zweiten npn-Bipolartransistors Q2 ist der Steuereingang der Darlingtonschaltung und über den fünften Widerstand R5 und die Apparateimpedanz $Z_{app}$ im Gesprächszustand an positives Potential angeschlossen. Dadurch wird der zweite npn-Bipolartransistor Q2 leitend geschaltet. Durch die Verwendung der Darlingtonschaltung ist der über den fünften Widerstand R5 fließende Steuerstrom so gering, daß der Gleichstromwiderstand nur ganz geringfügig verändert wird, wobei der achte Widerstand R8 sehr viel kleiner als der fünfte Widerstand R5 ist.

Für die Erfindung ist nicht maßgeblich, daß eine Darlingtonschaltung verwendet wird. Ein n-Kanal-Feldeffektransistor anstelle des 1. und des 2. npn-Bipolartransistors Q1, Q2 ist gleichermaßen geeignet, da Feldeffekttransistoren spannungsgesteuert sind und somit über den fünften Widerstand R5 kein Gleichstrom fließen würde. Der n-Kanal-Feldeffekttransistor wird dabei ebenfalls über den fünften Widerstand R5 gesteuert.

Die Apparateimpedanz $Z_{app}$ wird durch den fünften Kondensator C5 für Aussteuerung mit Sprachsignalen auf ein virtuelles Bezugspotential gelegt, da am dritten Anschluß HOP das Sendesignal aus niedriger Quellimpedanz eingespeist wird. Auf diese Weise entspricht die Eingangsimpedanz der Zweidraht-/Vierdraht-Schnittstelle 5 am ersten Anschluß A und am zweiten Anschluß B im wesentlichen der Leitungsimpedanz $Z_l$, so daß die Zweidraht-/Vierdraht-Schnittstelle 5 optimal an die analoge Zweidraht-Telefonleitung 10 angepaßt ist. Die so erzielbaren Werte für die Reflexionsdämpfung, dem Maß für die Anpassung der Eingangsimpedanz der Zweidraht-/Vierdraht-Schnittstelle 5 an die Leitungsimpedanz $Z_l$ sind daher extrem hoch.

Die Zulassungsvorschriften der einzelnen Länder schreiben ganz bestimmte definierte Leitungsnachbilder bzw. Leitungsabschlüsse vor, die gemäß einer Meßbedingung jeweils als Referenzabschluß identisch mit dem Leitungsabschluß bzw. der Leitungsimpedanz $Z_l$ der analogen Zweidraht - Telefonleitung 10 an die analoge Zweidraht-Telefonleitung 10 anzuschließen sind.

Pegelangaben wie Sendebezugsdämpfung, Empfangsbezugsdämpfung, Rückhörbezugsdämpfung, Reflexionsdämpfung, usw. beziehen sich ausschließlich auf Meßschaltungen mit dem jeweils vorgeschriebenen Leitungsabschluß. Der in Deutschland verwendete Leitungsabschluß wird in den Zulassungsvorschriften als Referenzabschluß oder kurz $Z_R$ bzw. $Z_{ref}$ bezeichnet.

Allen Ländervorschriften ist zudem gemein, daß in Abhängigkeit der Frequenz Mindestwerte für die Reflexionsdämpfung gefordert werden. Die Reflexionsdämpfung, Maßeinheit [dB], ist das Verhältnis von Apparateimpedanz $Z_{app}$ zu Referenzimpedanz $Z_{ref}$:

$$\text{Reflexionsdämpfung [dB]} = 20 \log \{(Z_{app} - Z_{ref})/(Z_{app} + Z_{ref})\}$$

Damit wird eine Aussage darüber gemacht, wie gut die Zweidraht-/Vierdraht-Schnittstelle 5 an die analoge Zweidraht-Telefonleitung 10 angepaßt ist.

Die landesspezifische Referenzimpedanz $Z_{ref}$ stellt tatsächlich nur einen Mittelwert derjenigen Leitungsimpedanzen $Z_l$ dar, die in Realität in dem jeweiligen analogen Telefonnetz vorzufinden sind und stellt damit nur eine Zulassungsmeßbedingung dar.

Die gemäß Figur 2 beschriebene Apparateimpedanz $Z_{app}$ ist komplex und entspricht genau der in Deutschland benötigten Referenzimpedanz $Z_{ref}$. In vielen europäischen Ländern ist die erforderliche Referenzimpedanz $Z_{ref}$ auch rein reell und somit rein ohmsch und beträgt beispielsweise 600$\Omega$. Der erste Kondensator C1, der erste Widerstand R1 und der zweite Widerstand R2 können dabei durch einen einzigen 600$\Omega$ Widerstand ersetzt werden. Die Anpassung an die analoge Zweidraht-Telefonleitung 10 kann somit ohne Berechnung lediglich durch Ersetzen der Referenzimpedanz $Z_{ref}$ der jeweiligen landesspezifischen Zulassungsvorschrift erfolgen.

Der Sendefrequenzgang ist zwischen 300Hz und 3400Hz linear. Das Sendesignal wird am dritten Anschluß HOP und am vierten Anschluß HON aus verhältnismäßig geringem Quellwiderstand eingespeist und gelangt mit einer konstanten Dämpfung von etwa 6dB zur analogen Zweidraht-Telefonleitung 10, die mit der Leitungsimpedanz $Z_l$ abgeschlossen ist.

Der Empfangsfrequenzgang ist im Sprachübertragungsband ebenfalls linear. Der Pegel am Auskoppelzweitor mit dem fünften Anschluß MIP und dem sechsten Anschluß MIN ist gegenüber dem Pegel am Eingangszweitor mit dem ersten Anschluß A und dem zweiten Anschluß B durch den dritten Widerstand R3 und den vierten Widerstand R4 im beschriebenen Beispiel um 6dB bedämpft, um die nachfolgende Eingangsstufe, beispielsweise den beschriebenen Analog-/Digital-Wandler nicht zu übersteuern. Der zweite Kondensator C2 und der dritte Kondensator C3 bilden für das Empfangssignal jeweils den Hochpaß 45 und entkoppeln die an den fünften Anschluß MIP und den sechsten Anschluß MIN angeschaltete Folgestufe von der Gleichspannung zwischen dem ersten Anschluß A und dem zweiten Anschluß B.

Im beschriebenen Ausführungsbeispiel gemäß Figur 2 ist der erste Spannungsteiler 25 und der zweite Spannungsteiler 30 jeweils rein ohmsch. Dies stellt eine vorteilhafte Ausführungsform der Erfindung dar. Eine Rückhör-Kompensation wird jedoch in gleicher Weise auch dann erreicht, wenn der erste Spannungsteiler 25 und der zweite Spannungsteiler 30 komplex sind, da das zu kompensierende Sendesignal am fünften Anschluß MIP und am sechsten Anschluß MIN nach wie vor amplituden- und phasengleich sind, wenn das Teilerverhältnis des ersten Spannungsteilers 25 1/(2n) und das Teilerverhältnis des zweiten Spannungsteilers 30 1/n bleiben, wobei n dann komplex ist.

Wird die Apparateimpedanz $Z_{app}$ verändert um die Anpassung des Telekommunikationsgerätes 1 an die analoge Zweidraht-Telefonleitung 10 eines anderen Landes zu realisieren, so ist dazu außer der Ersetzung der Apparatimpedanz $Z_{app}$ durch die Referenzimpedanz $Z_{ref}$ der jeweiligen landesspezifischen Zulassungsvorschrift keine weitere Umdimensionierung von Bauteilen der Zweidraht-/Vierdraht-Schnittstelle 5 erforderlich. Durch die vergleichsweise geringe Anzahl von Bauelementen zur Realisierung der Zweidraht-/Vierdraht-Schnittstelle 5 lassen sich Materialkosten ebenso wie Kosten und Zeit zur Bestückung einer entsprechenden Leiterplatte einsparen.

## Patentansprüche

1.    Telekommunikationsgerät (1) mit einer Zweidraht-/Vierdraht-Schnittstelle (5) zur Umsetzung einer analogen Zweidraht-Telefonleitung (10) auf getrennte Signalwege für einen Sendezweig (15) und einen Empfangszweig (20), wobei die Schnittstelle (5) zur analogen Zweidraht-Telefonleitung (10) hin einen ersten Anschluß (A) und einen zweiten Anschluß (B), zum Sendezweig (15) hin einen dritten Anschluß (HOP) und einen vierten Anschluß (HON) und zum Empfangszweig (20) hin einen fünften Anschluß (MIP) und einen sechsten Anschluß (MIN) aufweist, dadurch gekennzeichnet, daß der zweite Anschluß (B) mit dem vierten Anschluß (HON) verbunden ist, daß der dritte Anschluß (HOP) über eine Apparatimpedanz ($Z_{app}$), die einer Impedanz ($Z_l$) der analogen Zweidraht-Telefonleitung (10) entspricht, mit dem ersten Anschluß (A) verbunden ist, daß zwischen dem dritten Anschluß (HOP) und dem sechsten Anschluß (MIN) ein erster Spannungsteiler (25) vorgesehen ist, der ein am Sendezweig (15) anliegendes Sendesignal um einen Faktor 1/(2n) teilt und daß zwischen dem ersten Anschluß (A) und dem fünften Anschluß (MIP) ein zweiter Spannungsteiler (30) vorgesehen ist, der ein an der analogen Zweidraht-Telefonleitung (10) anliegendes Signal um einen Faktor 1/n teilt.

2. Telekommunikationsgerät (1) nach Anspruch 1, dadurch gekennzeichnet, daß der erste Anschluß (A) über einen steuerbaren Schalter (40), vorzugsweise eine Darlingtonschaltung oder einen Feldeffekttransistor, mit dem zweiten Anschluß (B) verbunden ist und daß der dritte Anschluß (HOP) über einen Tiefpaß (35) mit dem zweiten Anschluß (B) verbunden ist, wobei der steuerbare Schalter (40) über den Tiefpaß (35) steuerbar ist.

3. Telekommunikationsgerät (1) nach Anspruch 2, dadurch gekennzeichnet, daß ein durch den steuerbaren Schalter (40) gesteuerter Strom durch einen Widerstand (R8) begrenzt ist.

4. Telekommunikationsgerät (1) nach Anspruch 1, 2 oder 3, dadurch gekennzeichnet, daß dem fünften Anschluß (MIP) und dem sechsten Anschluß (MIN) jeweils ein Hochpaß (45) vorgeschaltet ist, wobei die beiden Hochpässe (45) jeweils die gleiche Übertragungsfunktion aufweisen.

# Fig. 1

# Fig. 2